# EUROPEAN PATENT APPLICATION

(11) **EP 2 073 157 A1**
(43) Date of publication of application: **24.06.2009**
(21) Application number: 08003048.9
(22) Date of filing: 19.02.2008
(51) Int. Cl.: G06Q 10/00

(54) **Real estate transaction system using real estate trust and method thereof**

(30) Priority: 21.12.2007 KR 20070134866; 17.01.2008 KR 20080005214; 31.01.2008 KR 20080010321
(71) Applicant: Youn, Hyun Jin, Jinyeong-cup, Gimhae-si Gyeongsangnam-do, 621-801 (KR)
(72) Inventor: Yoon, Ho Won, Seoul 130-080 (KR)
(74) Representative: TER MEER - STEINMEISTER & PARTNER GbR

(57) **Abstract**

Provided is a real estate transaction system and method using real estate trust that are capable of lessening a burden on a residence right holder and investors. Ownership of specific real estate can be entrusted and managed, a right for the real estate can be divided into a plurality of equity rights and circulated on line, and buyers holding the equity rights are allowed to divide their equity right and circulate the divided equity rights. The buyer desiring to reside on the property can own the real estate by paying almost as little as half of its price. Also, money is not tied up in the real estate for a long time, and an investor can invest a smaller amount of money in the real estate.

## Description

### CROSS-REFERENCE TO RELATED APPLICATION

This application claims the benefit of Korean Patent Application No. 2007-0134866, filed on Dec 21, 2007 and 2008-0005214, filed on Jan 17, 2008, which is hereby incorporated by reference as if fully set forth herein.

### BACKGROUND OF THE INVENTION

### 1. Field of the Invention

The present invention relates to a real estate transaction system and method, and more particularly, to a real estate transaction system and method using real estate trust that are capable of lessening a burden on a residence right holder and investors by selling entrusted real estate in the form of a plurality of equity rights to the residence right holder and the investors.

### 2. Discussion of Related Art

Developments in communication technology have led to a system that provides real estate transaction information and brokers real estate transactions between sellers and buyers via a network such as the Internet. For example, a technique of mitigating risk in real estate transactions through a network is disclosed in Korean Patent Application No. 10-2003-0033334, entitled "System and Method for Mediating Transactions in Real Estate Though Network" and Korean Patent Application No. 10-2004-0017945, entitled "Method For Real Estate Transaction with Escrow and Title Insurance through Computer Network."

However, conventional on-line real estate transaction technology using a network only facilitates real estate transactions between a buyer and a seller, and the buyer must still pay 100% of the real estate price to obtain ownership. In the case of real estate, particularly office buildings, commercial buildings, and apartments, a buyer desiring to actually reside on the property borrows some of the necessary funds from a bank and refunds principal and interest, rather than paying the total price. When a buyer desires to purchase real estate purely for the investment rather than to live on the property, he or she must invest a substantial amount of money which cannot be utilized for other purposes for a long time. In this case, investment risk increases in proportion to the scale of the real estate.

Accordingly, there is need for a new method of conducting real estate transactions that allows a buyer desiring to reside on the real estate to own the real estate by paying a lesser amount of money, and an investor to invest in a portion of the real estate.

### SUMMARY OF THE INVENTION

The present invention is directed to a real estate transaction system and method using real estate trust, in which real estate is entrusted, equity rights for the real estate are divided and sold so that buyers are classified into a buyer desiring to hold a residence right and investors desiring only to invest in the real estate depending on their equity percentages, and real estate registration and equity transfer are managed by a trust company, thereby enabling the residence right holder to reside on the property by paying a portion of its price, and the investor to invest an amount of money corresponding to desired equity in the real estate.

The present invention is also directed to a real estate transaction system and method using real estate trust, in which real estate is automatically entrusted and an equity right for the real estate is divided and sold by registering the real estate in a real estate transaction service provider server, a right to reside on the property is provided to a buyer buying a certain equity right, and an equity right of an investor is allowed to be easily purchased and sold, thereby maximizing equity management convenience of a resident and an investor.

The present invention is also directed to a real estate transaction system and method using real estate trust, in which ownership of specific real estate is entrusted and managed, the ownership is divided into a plurality of equity rights and circulated on line, a residence right holder and an investor are determined from among buyers holding a plurality of equity rights for the real estate based on a predetermined buying ratio, the residence right holder has a right to occupy the real estate, and the investor receives a larger dividend from capital gain for the real estate than the residence right holder.

The present invention is also directed to a real estate transaction system and method using real estate trust, in which a buyer conducts a transaction through a transaction or post-contract transaction process or a competition process using a price determined by a seller based on an estimated value based on current price in equity right transaction, transaction cost is automatically processed, and a trust right matter of a trust company is automatically modified, so that an easy and safe real estate equity rights transaction is made.

A first aspect of the present invention provides a real estate transaction system for transaction of equities of entrusted real estate via trader terminals connected over a network, the system comprising: a trust management server for managing equity rights for the entrusted real estate according to a predetermined trust condition; a real estate transaction management server for providing the trust management server with information on equity rights of the entrusted real estate and information on equity rights requested for sale by the trader terminal together with a current price, determining transaction allowable equity, a right to use the property, and a gain distribution ratio based on a desired equity right and buyer information according to the predetermined trust condition upon receipt of a request for purchase from the trader terminal, and providing a change in the equity right caused by the transaction to the trust management server; and a price providing server for providing price information of the entrusted real estate to the real estate transaction management server.

In a preferred embodiment, the predetermined trust condition comprises at least one of a percentage of an equity right yielding the right to use the property, a dividend ratio between the equity right yielding the right to use the property and an equity right for investment, a condition of a buyer of the equity right yielding the right to use the property, a condition of a buyer of the equity right for investment, a selling time condition, and a dividend condition.

Meanwhile, the percentage of the equity right yielding the right to use the property is 51%, the condition of a buyer of the equity right yielding the right to use the property is that the buyer belongs to a group of persons having a buying priority for real estate, and the selling time condition is that the equity right yielding the right to use the property is prohibited from being sold for a predetermined period of time.

In a preferred embodiment, when a time limit elapses or a target earning rate is reached, the real estate transaction management server provides a dividend from capital gain, in which a dividend rate of an equity right yielding the right to use the property is smaller than that of an equity right for investment.

A second aspect of the present invention provides a method for conducing real estate transaction between terminals of equity right traders connected over a network, the method comprising: a requesting step of accessing, by a seller terminal, a real estate transaction service provider server and providing information on real estate for sale to the real estate transaction service provider server to request a real estate transaction service provider to sell the real estate; an entrusting step of sending, by the real estate transaction service provider, a predetermined trust condition and information on the real estate requested for sale to a trust company system via the network to entrust the real estate to a trust company, and receiving equity right information as a response to the entrusting of the real estate; a selling step of providing, by the real estate transaction service provider, equity right information, the trust condition, and price information to divide and sell the equity right; a buyers' right determining step of determining a buyer buying the equity right in the selling step as one of a residence right holder having a right to reside on the property and an investor having a right to obtain capital gain, based on the trust condition; and a dividend providing step of providing, if a predetermined dividend condition is satisfied, gains from the real estate as dividends to the residence right holder and the investor in a predetermined ratio.

Preferably, the percentage of the equity right yielding the right to use the property is 51%. The percentage of the equity right yielding the right to use the property may be set to another value. The percentage of equity right yielding a residence right may include at least two equity percentages: a first residence right equity percentage and a second residence right equity percentage, which yield different dividend percentages of the residence right and the investment right.

According to the present invention, ownership of specific real estate can be entrusted and managed, a right for the real estate can be divided into a plurality of equity rights and circulated on line, and buyers holding the equity rights can divide their equity right and circulate the divided equity rights via the network. Thus, a plurality of equity rights for one piece of real estate can be freely divided and repeatedly circulated. Furthermore, a residence right holder and an investor among buyers holding equity rights can be determined according to a predetermined buying ratio, the residence right holder can have a right to occupy the real estate, and the investor can receive larger dividends from capital gain for the real estate than the residence right holder.

Accordingly, the buyer desiring to reside on the property can own the real estate by paying almost as little as half of its price. Also, money is not tied up in the real estate for a long time; short-term investment is possible. Also, an investor can invest a smaller amount of money in the real estate. In particular, an equity percentage of the residence right can be lowered to 10% or smaller, instead of 51%. This makes it possible for the buyer to reside on the property by paying a lesser amount of money.

Furthermore, investment in real estate can be promoted and real estate capital can be brought into the open and used for factories, thus creating a new real estate market. In particular, an investor can adjust an equity percentage of an investment right for both residence and investment, thereby suppressing real estate speculation, stabilizing residence, and contributing to social stabilization. Also, the present invention guarantees stabilized tax sources to contribute to the national economy.

As the real estate trust company becomes owner of the entrusted real estate, the residence right holder and the investor are not allowed to establish provisional registration for the real estate, but are allowed to establish a pledge right on security for a residence right certificate and investment security. Thus, the residence right holder and the investor can exercise property rights, like conventional real estate owners.

### BRIEF DESCRIPTION OF THE DRAWINGS

The above and other objects, features and advantages of the present invention will become more apparent to those of ordinary skill in the art by describing in detail preferred exemplary embodiments thereof with reference to the attached drawings, in which:
FIG. 1 is a conceptual diagram of a system according to an exemplary embodiment of the present invention;
FIG. 2 is a block diagram of a system according to an exemplary embodiment of the present invention;
FIG. 3 is a block diagram illustrating a real estate transaction service provider server according to an exemplary embodiment of the present invention;
FIG. 4 is a flowchart illustrating a real estate transaction method according to an exemplary embodiment of the present invention;
FIG. 5 illustrates a real estate trust request according to an exemplary embodiment of the present invention;
FIG. 6 illustrates a real estate trust book according to an exemplary embodiment of the present invention;
FIG. 7 is a flowchart illustrating a real estate transaction process according to an exemplary embodiment of the present invention; and
FIG. 8 is a flowchart illustrating a real estate equity circulating process according to an exemplary embodiment of the present invention.

**<Illustration of Reference Number for Principal Parts of Drawings>**

| | | | |
|---|---|---|---|
| 10: | Real Estate | 100: | Real estate transaction system |
| 120: | Real estate transaction service provider server | | |
| 140: | Seller terminal | 160: | Trust company system |
| 180,190: | Buyer terminal | | |
| 200: | Real estate transaction management server | | |
| 123: | Transaction database | | |

### DETAILED DESCRIPTION OF EXEMPLARY EMBODIMENTS

Hereinafter, exemplary embodiments of the present invention will be described in detail. The present invention is not limited to the embodiments disclosed below, but can be implemented in various forms. The following embodiments are described to enable those of ordinary skill in the art to embody and practice the invention.

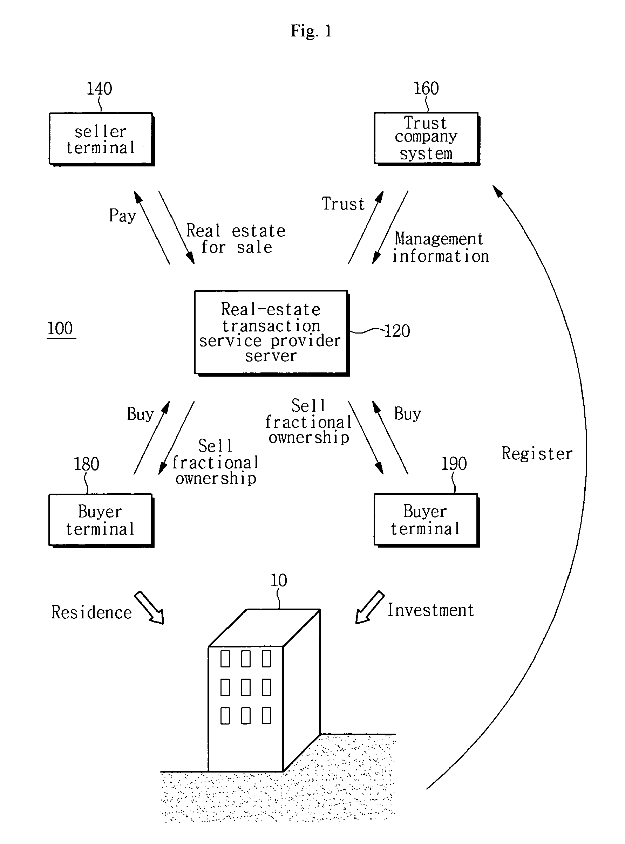

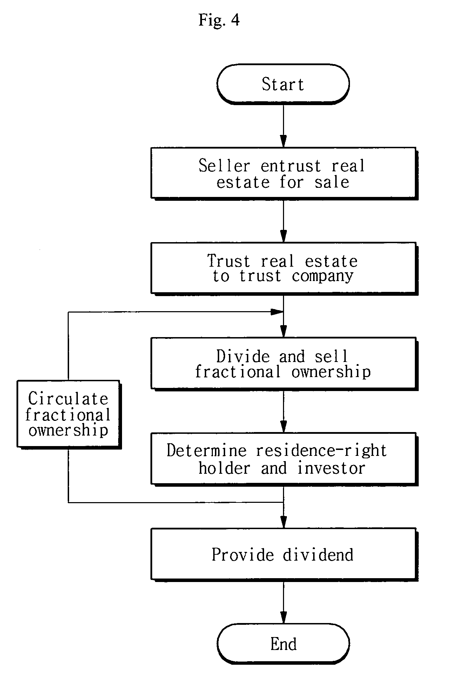

FIG. 1 is a schematic block diagram illustrating a real estate transaction system using real estate trust according to an exemplary embodiment of the present invention. FIG. 4 is a flowchart illustrating a real estate transaction method using real estate trust according to an exemplary embodiment of the present invention. While exemplary embodiments of the present invention will be described with respect to real estate, the system and method of the present invention may apply to quasi-real estate that can be entrusted, occupied, or invested by a person, such as vehicles, ships, works of art, curios, etc.

In real estate transaction using trust according to an exemplary embodiment of the present invention, as shown in FIG. 1, a user accesses an on-line transaction system via his or her terminal, and entrusts real estate to the system. Equity rights of the entrusted real estate are provided for sale, and a buyer holding a certain equity right has a right to use the property. This scheme can reduce a burden on a buyer desiring to use the property and a buyer desiring investment.

Referring to FIG. 1, a seller of specific real estate 10 accesses a real estate transaction service provider server 120 via a seller terminal 140. The real estate transaction service provider server 120 provides information on real estate for sale from the seller terminal 140 to a trust company system 160 of a trust company that professionally deals with legal matters relating to real estate trust, in order to request the trust. The trust company system 160 provides management information including equity right information for entrusted real estate to the real estate transaction service provider server 120. The real estate transaction service provider server 120 divides the equity rights and sells the same to the buyer terminal 180 or 190. The buyer terminal 180 buying a specific equity right has a right to use the property (e.g., a residence right), and the buyer terminal 190 buying a remaining equity right has a right to receive an investment gain such as a capital gain. For fair gain distribution, equity providing a right to use the property has a smaller dividend rate of capital gain than equity providing an investment gain. Meanwhile, when a gain is generated from the use of real estate, a portion of the gain may be provided as a dividend. Preferably, a dividend for equity to use the property is larger than that for investment equity.

The real estate transaction service provider server 120 cooperates with a map information database (not shown) to confirm a geographical location of a specific real estate or with an Internet registry office site of (the relevant government agency) the Korean Supreme Court (not shown), for example, to read real estate registers.

In the exemplary embodiment shown, the real estate transaction service provider server 120 serves to circulate equity rights. In other embodiments, the real estate transaction service provider server 120 and the trust company system 160 may deal with financial goods. For example, both the server 120 and the system 160 may provide their web sites on the Internet, collect members, manage member information, provide an interface for enabling persons to request financial goods related to real estate, collect and provide information on real estate for sale, and provide an equity-right transaction service and a transfer service. Preferably, the real estate transaction service provider server 120 and the trust company system 16 share related information.

The real estate transaction service provider server 120 may be managed by a security company, a real estate agent, a real estate trust company, an individual, or the like.

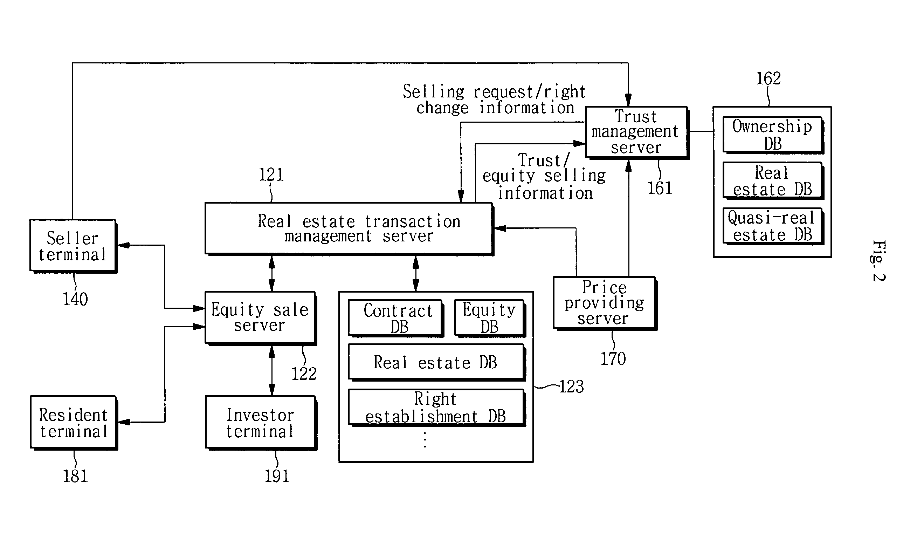

While the server 120 and the trust company system 160 are shown as separate entities, they may be implemented as the same physical device. Also, while one real estate transaction service provider server or one trust company system are shown in FIG. 2, the server or system may be implemented by a network system comprising a plurality of sub-servers located at several regions. This network system is useful when providing information on real estate rights, e.g., equity rights, and allowing the members to perform transaction and transfer procedures.

For simplicity, only one seller terminal 140 and two buyer terminals 180 and 190 are shown in FIG. 2. The number of terminals, however, is not limited. When general network users become members through a member subscription procedure provided by the real estate transaction service provider server 120 of the present invention and perform a transaction procedure, they may become the seller terminal 140 or the buyer terminal 180 or 190, which may also be referred to as a trader terminal.

FIG. 2 is a block diagram illustrating a real estate transaction system according to an exemplary embodiment of the present invention. Referring to FIG. 2, the real estate transaction system includes a trust management server 161 and a trust database 162 of a trust company system 160; a real estate transaction management server 121, an equity sale server 122, and a transaction database 123 of a real estate transaction service provider server 120; a price providing server 170; a seller terminal 140; and trader terminals (e.g., a resident terminal 181 and an investor terminal 191).

The trust management server 161 may manage equity rights for entrusted real estate according to a predetermined trust condition. The trust management server 161 may exchange information on a change of equity rights with the real estate transaction management server 121, receive real estate trust information from the real estate transaction management server 121 to establish rights, and provide information on the equity rights to the real estate transaction management server 121. Also, the trust management server 161 may provide information on directly entrusted real estate and equity right information to the real estate transaction management server 121 to make a request for vicarious execution of transaction. The trust database 162 stores real estate ownership (an ownership DB); information on real estate recorded on a register, information recorded on a trust book, and trust condition information (a real estate DB); and information on quasi-real estate, such as objects other than real estate, that provides a gain to users (a quasi-real estate DB). Of course, member information, and information on charges for right change, a cost, a tax, and the like may also be managed by the database.

Here, the trust condition may be established upon entrusting the real estate or later on and may be modified later on. The trust condition information includes a percentage of an equity right yielding the right to use the property, a dividend ratio between the equity right yielding the right to use the property and an equity right for investment, a condition of a buyer of the equity right yielding the right to use the property, a condition of a buyer of the equity right for investment, a selling time condition, etc.

For example, the equity right yielding the right to use the property may be set to 51 %. The dividend ratio between the equity right yielding the right to use the property and the equity right for investment may be set to 30:70. The buyer of the equity right yielding the right to use the property may be set to a houseless person who is a first priority and supports two or more members of his or her family. In the case of the condition of the selling time, the equity right yielding the right to use the property is prohibited from being sold for seven years after acquisition of the equity right, and the equity right for investment is allowed to be divided and sold immediately after acquisition of the equity right. In this manner, the trust condition may be determined according to a policy that reflects a type and price of real estate, a transition of a real estate policy, effects of the real estate on society, and the like. The trust condition may adjust a level of activation and stability of a real estate market. Meanwhile, the trust condition may be changed by entire equity sale, maximum equity sale, dividend distribution, an agreement among equity right holders, a change of a service policy, etc.

The real estate transaction management server 121 is connected to the trust management server 161 and the price providing server 170. The real estate transaction management server 121 provides information on equity rights of the entrusted real estate and information on equity rights requested for sale by the trader terminal (e.g., the resident terminal 181 or the investor terminal 182) together with a current price. Also, the real estate transaction management server 121 determines transaction allowable equity, a right to use the property, and a gain distribution ratio based on an equity right and buyer information according to a predetermined trust condition upon receipt of a request for purchase from the trader terminal (e.g., the resident terminal 181 or the investor terminal 182). Also, the real estate transaction management server 121 provides a change in the equity right caused by the transaction to the trust management server 161. That is, the real estate transaction management server 121 performs transaction of the equity rights for the entrusted real estate in lieu of the seller, and provides a function of enabling equity right holders to resell their equity rights (i.e., to circulate the equity rights).

While, in the system shown in FIG. 2, the equity sale server 122, which may be a web server that provides an interface to the seller terminal 140, the resident terminal 181, and the investor terminal 191, has been configured as an independent entity, the equity sale server 122 may be incorporated into the real estate transaction management server 121.

In order to provide the above service, the real estate transaction management server 121 may include a transaction database 123 for storing contract information for equity sale, equity information, information on real estate recorded on a register, and trust condition information (a real estate DB); right establishment information including information recorded on a trust book; information on costs including charge and tax; transaction information for equity sale; and dividend information. The transaction database 123 may further include a member information database for managing member information, a database for managing buying and selling request information, a buyer information database, and a seller information database.

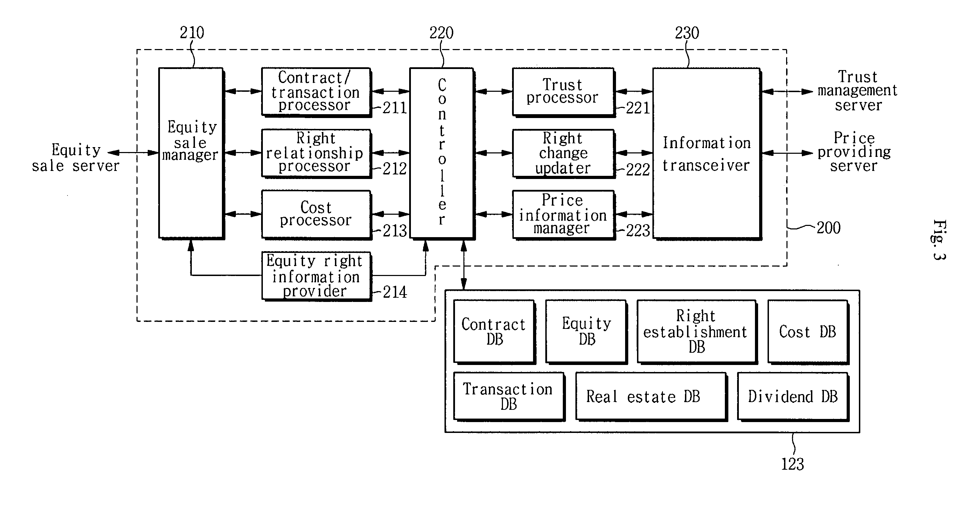

FIG. 3 is a block diagram illustrating a real estate transaction management server 200 according to an exemplary embodiment of the present invention. Referring to FIG. 3, the real estate transaction management server 200 is configured to cooperate with a transaction terminal, a trust management server, and a price providing server.

First, the real estate transaction management server 200 includes an equity sale manager 210 connected to the transaction terminal via an equity sale server for providing equity sale information or receiving a request to buy or sell real estate; an equity information provider 214 for providing information on equity rights for the real estate together with a current price and a dividend ratio; a contract/transaction processor 211 for comparing buyer information with a trust condition for the real estate upon receipt of a buying request to determine whether the buyer is allowed to buy the real estate, and processing a contract or a transaction when it is determined that the buyer is allowed to buy the real estate; a right relationship processor 212 for producing information on a change in a right relationship to be provided to the buyer and the trust management server, based on the result from the contract/transaction processor 211; and a cost processor 213 for paying a price of the real estate and a transaction cost based on the result from the contract/transaction processor 211 and separately settling up tax and charge constituting the cost.

The real estate transaction management server 200 further includes a trust processor 221 for entrusting real estate to the trust management server or registering equity information for the real estate from the trust management server; a right change updater 222 for exchanging information on a change in the equity right with the trust management server; a price information manager 223 for feeding back equity price information resulting from transaction success to the price providing server; and an information transceiver 230 for connecting the trust processor 221, the right change updater 222 and the price information manager 223 to the trust management server and the price providing server.

Meanwhile, the real estate transaction management server 200 may further include a controller 220 for managing the components, connecting inputs and outputs of the components with each other, providing information or an operation function required for determination, providing required information from the transaction database 123, updating the transaction database 123 with output information, and performing dividend-related processing.

The right relationship processor 212 classifies the buyer into a person holding a right to use the property (e.g., a residence right holder or a resident) and an investor, depending ton a content of the transaction. When a seller requests to sell his or her real estate, the trust processor 221 may entrust the real estate to the trust management server and receive real estate equity information as the trust result. When the buyer directly entrusts the real estate to the trust company system, the trust processor 221 receives and registers the real estate equity information.

Meanwhile, the right change updater 223 may further include a right change notifier for notifying an equity right holder of a right change state, for example, via an e-mail, a short message, a voice message, or a multimedia message, when the equity right is changed.

The price information manager 223 provides real estate price information resulting from transaction success to the price providing server, which may update existing price information with the real estate price information.

The equity right information provider 214 registers the equity right and sale price designated by the seller, provides the information together with price information and dividend information. The contract/transaction processor 211 may perform the equity right sale using at least one of post-contract transaction, immediate transaction, and competitive bid.

When a time limit as the trust condition elapses or a target earning rate as the trust condition is accomplished, the controller 220 provides a dividend from capital gain. In this case, a dividend rate of the equity right yielding the right to use the property is smaller than that of the equity right for investment. Meanwhile, when the real estate is a house for residence, only a capital gain is provided as a dividend while when the real estate is a commercial building, an office building, or a parking lot capable of yielding a gain, a portion of the gain may be provided as a dividend according to a predetermined period of time. In this case, a greater dividend may be provided to a real estate user who contributes to earnings by using the real estate, unlike the dividend from the capital gain.

The system may further include a unit (not shown) for providing geographical information or price transition information for real estate.

FIG. 4 is a flowchart illustrating a method for providing real estate transaction service between a seller and a buyer according to an exemplary embodiment of the present invention.

First, the seller accesses the real estate transaction service provider server via the seller terminal and provides information on real estate for sale (e.g., an apartment, a house, an office building, or a commercial building) to the real estate transaction service provider server. The information may be easily provided, for example, by using web documents on a web site. In this manner, the seller entrusts a real estate transaction service provider to sell the real estate. The seller may receive payment for entrusted real estate from the real estate transaction service provider. This payment may be received after the real estate is entrusted or the buyer pays a price of the real estate.

The real estate transaction service provider server (including the sub-servers) and the trust company system may provide buying/selling request forms on the web so that the seller entrusts to sell the real estate or the buyer buys the real estate. The selling request form may include, for example, an indication of the real estate, a right type (i.e., a residence right and an investment right), sell/buy, personal information of a requester (e.g., an identification number, a name, an address, etc.), and an identity document (to be attached to the request). The request may further include an address of property, a type of the real estate (e.g., an office building, a commercial building, vacant land), equity percentages of a residence right and an investment right, division of the investment right, and dividend percentages of capital gain. To make a sell or buy request, the seller or the buyer may write required information into the buying/selling request forms and send the same to the real estate transaction service provider server. Other trust condition (e.g., a buyer condition and a transaction condition) may be set automatically, for example, depending on a service policy or a governmental policy.

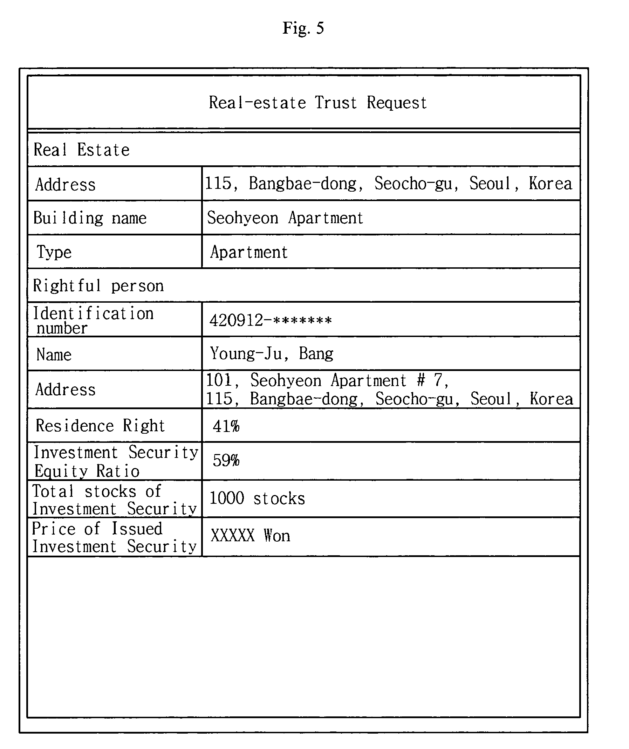

FIG. 5 illustrates an example of such a real estate trust request. This request is only a simple example and may be modified if necessary. The real estate trust request includes an address of property and a type of a real estate in order to define the entrusted real estate. The real estate trust request may further include a name of a building, if possible, in order to facilitate the definition.

The real estate trust company is written as an owner for real estate trust. Equity percentages and dividend percentages of the residence right holder and the investor may be identified from the trust book. The residence right holder and the investor may be easily identified by different colors. Also, the residence right holder and the investor may be identified by their beneficiary securities. The beneficiary securities are made with different colors for easy identification of a type of the right. The trust process allows an original rightful person to designate a third party as a residence right holder. It results that the real estate is transferred to the residence right holder. The trust request requires determining the equity percentages of the residence right and the investment security. and, the corresponding dividend percentages may be also determined and written separately. Total stocks of an issued investment security and a price of one stoke of the investment security may be written.

In the flowchart of FIG. 4, after the seller entrusts to sell a specific real estate, the real estate is entrusted to the real estate trust company. The trust is made by the real estate transaction service provider sending trust information on the real estate (e.g., real estate trust request information and trust condition information) to the trust company system. Under a legal registration system, an owner must legally register his or her real estate to exercise his or her right against other persons. The trust company system may be connected, for example, to an on-line national registry office system, and registered as an owner in Section A of a real estate registry according to the trust condition of the entrusted real estate. Related legal management information on the real estate may be sent from the trust company system to the real estate transaction service provider server.

According to the present invention, the trust company system may produce and store a trust register on which the residence right, the investment right, and the change of circulated equity rights for the specific real estate are written, and may manage and update the trust register in cooperation with the real estate transaction service provider server. Also, the trust company system may allow the members to read a content of the trust register for free or at cost. The trust registry provided by the trust company system of the present invention may have a similar format with a real estate registry or a trust registry actually provided by (the relevant government agency)the Korean Supreme Court.

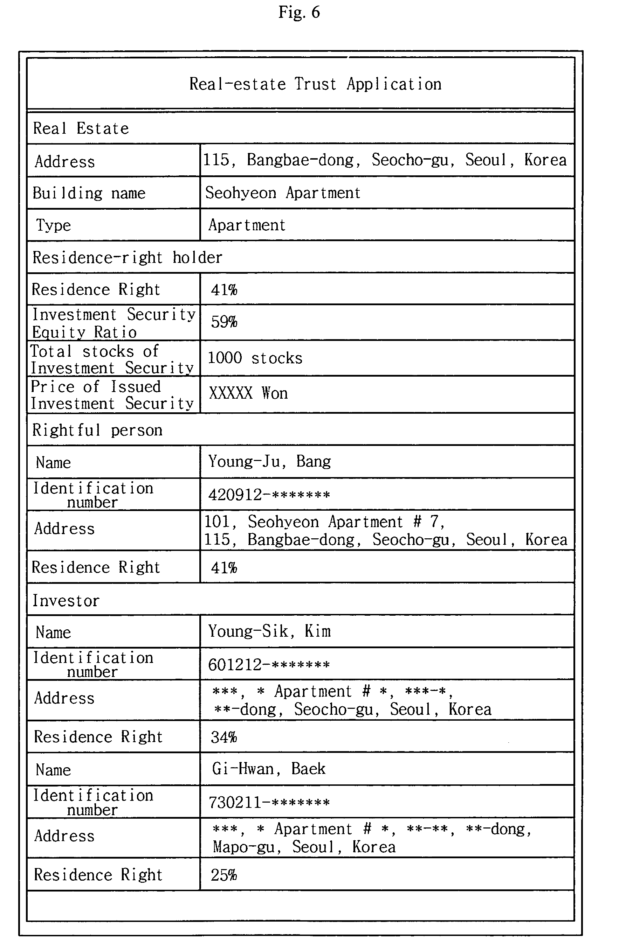

Meanwhile, details of the residence right holder and the investor having investment security are preferably written to a separate real estate trust book. An example of the real estate trust book is shown in FIG. 6.

As a subsequent step of the flowchart shown in FIG. 4, a real estate dividing and selling step is then conducted in which the real estate transaction service provider provides information on a plurality of equity rights each containing at least a portion of the right related to the real estate, to the plurality of buyer terminals, which may access the real estate transaction service server via the network, and sells the equity rights. Here, the equity right may indicate ownership equity of the specific real estate. For example, the smallest equity that can be sold may include 50%, 10%, 5%, and 1%. This equity may be obtained by dividing 100% of a current price of the real estate. The equity rights may be provided as certificates to the buyers. Right transfer for each certificate may be managed, for example, by the trust company in a transfer procedure.

If the equity rights for the specific real estate are all sold, for example, in an on-line transaction, a buyers' right determining step is conducted in which a residence right holder having a right to actually reside on the property and an investor having a right only to obtain capital gain from the real estate are determined from among a plurality of buyers buying the equity rights according to predetermined criteria determined by the real estate transaction service provider server. Of course, the buyers' right determining step may be conducted each time the buyers buy the equity right. The residence right holder has a right to directly occupy and use the property, i.e., a space of an apartment, a commercial building, or an office building. The investor has only an equity right, i.e., a right to receive a predetermined dividend from the capital gain of the real estate at a specific time, instead of the right to directly occupy and use the property. The residence right holder may also have the right to receive a predetermined dividend from the capital gain of the real estate at the specific time. Meanwhile, as described above, the trust condition requires the residence right holder to qualify by meeting a specific requirement; the residence right holder is limited in an equity right transaction time. Also, when a gain other than capital gain is generated by occupancy of a specific type of real estate, some of the gain may be provided as a dividend.

In this manner, the residence right holder can obtain a right to reside on property merely by paying a portion of actual real estate price. Also, an investor is allowed to invest in the real estate without occupying the property by paying a portion of actual real estate price

In other exemplary embodiments, the predetermined equity percentage of the residence right may be 51%. In this case, the residence right holder may acquire the right to reside on the property and the right to receive a dividend from the capital gain by paying only 51% of the real estate price. The investor is at least one buyer who buys an equity right corresponding to 49%. The investor has a right to resell his or her equity right, as well as a right to divide and sell the equity right. The investor who does not sell the equity right has a right to receive a dividend from a capital gain. The predetermined percentage of the residence right does not have to be 51 %. It may be 40%, 60%, etc.

For example, if the present invention is applied to apartment sale, a buyer can reside in the apartment by paying the half of an actual selling price of the apartment. In general, persons desiring to buy an apartment and reside in the apartment lend most of the apartment price from a bank. The present invention allows the persons to own their houses without interest payment. The investors holding the equity rights do not have the resident right, but have only the right to receive the dividend. Accordingly, the investors holding the equity rights are allowed to directly invest in desired real estate even though they own several houses, thereby activating investments.

In other exemplary embodiments of the present invention, the predetermined equity percentage of the residence right may include at least two equity percentages, i.e., a first residence right equity percentage and a second residence right equity percentage. Preferably, the at least two predetermined residence right equity percentages, i.e., the first residence right equity percentage and the second residence right equity percentage, may differ from dividend percentages of the residence right and the investment right from capital gain. Upon selling the real estate, the dividend percentages may be determined according to opinions of the trust company and the persons concerned and immediately applied. Also, percentages of the residence right and the investment right may be flexibly applied according to a government's real estate policy.

Thereafter, if a predetermined dividend condition is satisfied that may be, for example, one of expiration of a predetermined time limit or a rise of a current price of the real estate in excess of a predetermined price, gains from the real estate is provided as dividends to the residence right holder and the investor in a predetermined ratio. The dividend providing step may be performed by the trust company providing the gain from the real estate as dividends to the residence right holder and the investor when the real estate is sold to a third party. In addition, as described above, when a gain is generated from use of the real estate, the gain may be periodically distributed as a dividend depending on equity rights, in which a dividend ratio may differ from a dividend from capital gain ratio.

In other exemplary embodiments of the present invention, the method comprises a step of circulating the equity right. That is, prior to the dividend providing step, the method further includes the equity-right circulating step in which the investor entrusts the real estate transaction service provider server to sell his or her equity right, and the real estate transaction service provider server sells the equity right to a plurality of buyer terminals via the network.

Since the investor desires only to receive returns for investment, he or she can sell the equity right, instead of waiting to receive the dividend, to retrieve his or her money invested in the equity right. Also, the investor divides and circulates the equity right by a desired amount according to the present invention. Accordingly, the investor can retrieve a desired amount of the investment within a desired period, thus increasing a degree of freedom of the real estate investment.

In particular, such equity-right circulation may be transaction of a right related to the real estate, like a bond. Since the equity right is a right to receive a specific dividend after a predetermined time lapses, it may have the same nature as stocks of a stock company. That is, according to the equity-right circulating step 250 of the present invention, the equity right itself may advantageously be an independent investment object, like a stock. In the circulating process, a price of the equity right itself rises or falls according to prospects for a current price of the real estate. Accordingly, the investor may obtain gains in the equity-right circulating process, in addition to the capital gain.

Meanwhile, the real estate transaction scheme according to an exemplary embodiment of the present invention differs from differs from real estate investment trusts (REITs) that is a conventional simple lease system in that a person desiring residence can buy a residence right at almost a half value and a person desiring investment can separately buy only a right for investment.

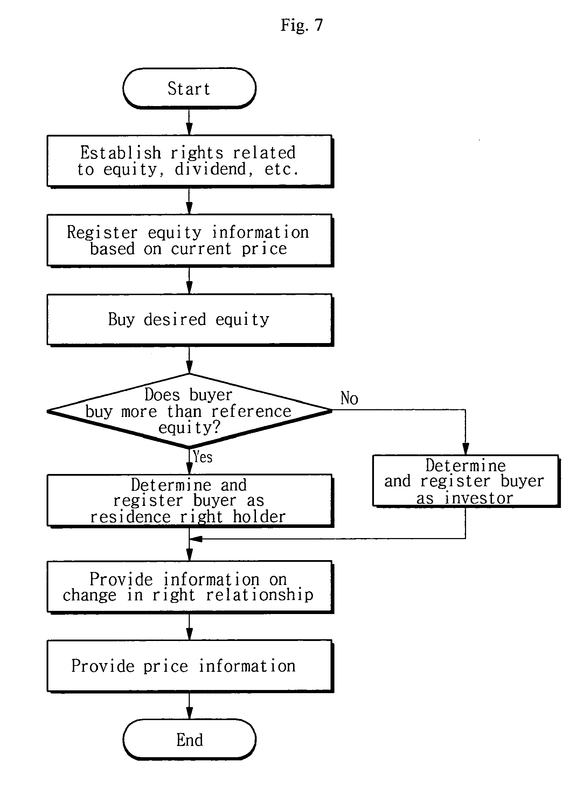

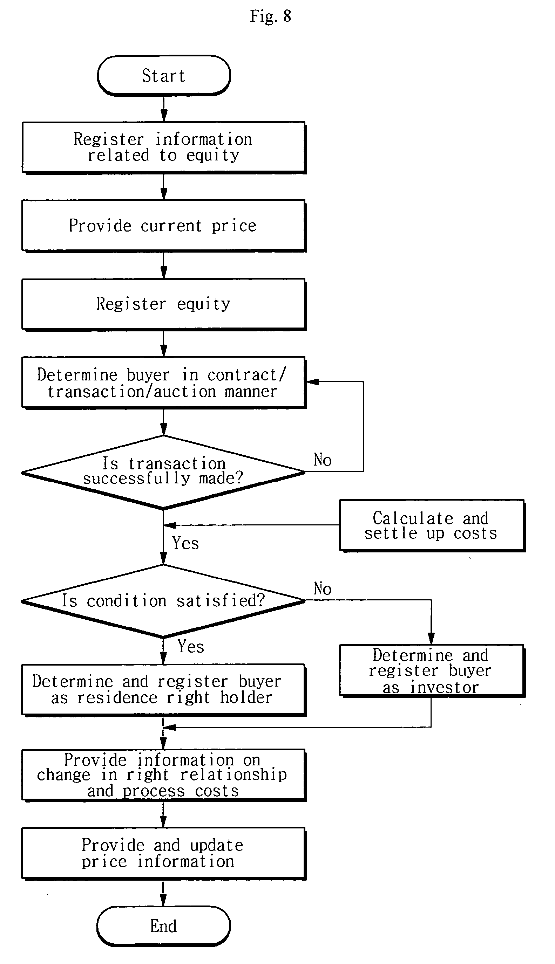

FIGS. 7 and 8 are flowcharts illustrating the equity-right circulating process described above.

FIG. 7 is a flowchart illustrating a process of selling equity rights for entrusted real estate that is requested for sale. As shown in FIG. 7, rights related to equity, a dividend, and a trust condition are established in a trust process. In this case, the equity may be registered based on current price of the real estate or on different price from the current price by the request for sale. Then, a buyer accesses the real estate transaction service provider server via his or her buyer terminal to check information on the equity of the registered real estate and request to buy desired equity.

If the buyer satisfies a buyer condition and buys more than reference equity, the buyer is determined and registered as a residence right holder. If the buyer does not satisfy the buyer condition and buy more than the reference equity, the buyer is determined and registered as an investor. When the buyer does not satisfy the buyer condition, he or she is allowed to buy only equity permitted to the investor.

After such a buying process is completed, the real estate transaction service provider server provides information on a change in a right relationship to the trust company system to make a request for right change. Upon receipt of the right change result, the real estate transaction service provider server stores the right change result and notifies traders and related persons of the right change result.

If the transaction is made with a different price from the current price, this transaction information is fed back to the price providing server for updating of the current price information.

FIG. 8 is a flowchart illustrating an equity right circulating process. As shown in FIG. 8. If a buyer registers information on equity of real estate for sale in the real estate transaction service provider server, the real estate transaction service provider may provide current price of the equity (a range of real estate price (a minimum price, an average price, and a maximum price) or an average price) or may provide price transition. Also, the real estate transaction service provider may provide calculate an expected equity selling price using the price and a dividend rate for the equity and provide the expected equity selling price.

The seller may automatically register an equity selling price that reflects the current price. However, since an asked price of real estate may vary with a location condition or a favorable indication for the real estate, the seller sets the selling price of the equity to a desired asked price reflecting the current price and then registers a request for equity sale. The seller may further register a comment on the real estate for sale, such as a favorable indication, an environmental factor, and a state of the real estate.

The registered equity is provided to buyers that have accessed the real estate transaction service provider server together with the current price. Also, real estate location information, environmental information, and right information may be provided, if necessary. A buyer may check such registered sale information to buy the equity according to a buying manner, such as a manner of conducting transaction by obtaining a transaction priority via a contract and settling a remainder payment date, an immediate transaction manner, or a competitive bid manner with a certain price or a time limit. Meanwhile, when the equity is an equity right yielding the right to use the property (i.e., a residence right), there may be a buyer condition. Accordingly, only if the buyer condition is satisfied, transaction is successively made, and otherwise, the transaction may not be made.

When the transaction is successively made in the above manner, the real estate transaction service provider server calculates costs such as tax and charge based on the transaction price, and then settles the costs, completing the transaction process.

After the transaction process is completed, the real estate transaction service provider server classifies a transaction content according to the trust condition to determine a residence right holder and an investor, registers related information, and sends the information to the trust company system for a right change. Upon receipt of the right change result from the trust company system, the real estate transaction service provider server notifies related persons of the result via an e-mail, a short message, or a multimedia message, and settles a cost related to the right change with the trust company system.

When the transaction is completed, the real estate transaction service provider server sends the transaction price information to the price providing server for update of the current price.

While the invention has been shown and described with reference to certain exemplary embodiments thereof, it will be understood by those skilled in the art that various changes in form and details may be made therein without departing from the spirit and scope of the invention as defined by the appended claims.

## Claims

1. A real estate transaction system for transaction of equities of entrusted real estate via trader terminals connected over a network, the system comprising:
a trust management server for managing equity rights for the entrusted real estate according to a predetermined trust condition;
a real estate transaction management server for providing the trust management server with information on equity rights of the entrusted real estate and information on equity rights requested for sale by the trader terminal together with a current price, determining transaction allowable equity, a right to use the property, and a gain distribution ratio based on a desired equity right percentage and buyer information according to the predetermined trust condition upon receipt of a request for purchase from the trader terminal, and providing a change in the equity right caused by the transaction to the trust management server; and
a price providing server for providing price information of the entrusted real estate to the real estate transaction management server.

2. The system of claim 1, wherein the predetermined trust condition comprises at least one of a percentage of an equity right yielding the right to use the property, a dividend ratio between the equity right yielding the right to use the property and an equity right for investment, a condition of a buyer of the equity right yielding the right to use the property, a condition of a buyer of the equity right for investment, a selling time condition, and a dividend condition

3. The system of claim 2, wherein the percentage of the equity right yielding the right to use the property is 51 %, the condition of a buyer of the equity right yielding the right to use the property is that the buyer belongs to a group of persons having a buying priority for real estate, and the selling time condition is that the equity right yielding the right to use the property is prohibited from being sold for a predetermined period of time.

4. The system of claim 1, wherein the predetermined trust condition is changed by at least one of maximum equity sale, dividend distribution, an agreement among equity right holders, and a change of a service policy.

5. The system of claim 1, wherein the real estate transaction management server comprises:
an equity information provider for providing information on equity rights for the real estate together with a current price and a dividend ratio;
a transaction processor for comparing buyer information with a trust condition upon receipt of a buying request to determine whether the buyer is allowed to buy the real estate and processing a contract or a transaction when it is determined that the buyer is allowed to buy the real estate;
a right relationship processor for producing information on a change in a right relationship to be provided to the buyer and the trust management server, based on the result from the transaction processor; and
a cost processor for paying a price of the real estate and a transaction cost based on the result from the transaction processor and separately settling up tax and charge constituting the cost.

6. The system of claim 1, wherein the real estate transaction management server further comprises:
a trust processor for entrusting real estate to the trust management server or registering equity information for the real estate from the trust management server;
a right change updater for exchanging information on a change in the equity right with the trust management server; and
a price information manager for feeding back equity price information resulting from transaction success to the price providing server.

7. The system of claim 1, wherein the real estate transaction management server feeds back real estate price information resulting from transaction success to the price providing server, which updates existing price with the fed back price information.

8. The system of claim 1, wherein the real estate transaction management server registers the equity right and sale price designated by the seller, provides the information together with price information and dividend information, and performs equity right sale using at least one of post-contract transaction, immediate transaction, and competitive bid.

9. The system of claim 1, wherein when a time limit elapses or a target earning rate is reached, the real estate transaction management server provides a dividend from capital gain, in which a dividend rate of an equity right yielding the right to use the property is smaller than that of an equity right for investment.

10. The system of claim 1, wherein the real estate transaction management server comprises a right change notifier for notifying an equity right holder of a right change state via at least one of an e-mail, a short message, a voice message, or a multimedia message when the equity right is changed.

11. A method for conducing real estate transaction between terminals of equity right traders connected over a network, the method comprising:
a requesting step of accessing, by a seller terminal, a real estate transaction service provider server and providing information on real estate for sale to the real estate transaction service provider server to request a real estate transaction service provider server to sell the real estate;
an entrusting step of sending, by the real estate transaction service provider server, a predetermined trust condition and information on the real estate requested for sale to a trust company system via the network to entrust the real estate to a trust company, and receiving equity right information as a response to the entrusting of the real estate;
a selling step of providing, by the real estate transaction service provider server, equity right information, the trust condition, and price information to divide and sell the equity right;
a buyers' right determining step of determining a buyer buying the equity right in the selling step as one of a residence right holder having a right to reside on the property and an investor having a right to obtain capital gain, based on the trust condition; and
a dividend providing step of providing, if a predetermined dividend condition is satisfied, gains from the real estate as dividends to the residence right holder and the investor in a predetermined ratio.

12. The method of claim 11, wherein in the entrusting step, the predetermined trust condition comprises at least one of a percentage of equity right yielding a residence right, a dividend ratio between a residence right holder and an investor, a condition for a residence right holder, a selling time condition, and a dividend condition

13. The method of claim 11, wherein in the buyer's right determining step, the trust condition comprises a percentage of equity right yielding a residence right and a condition for a residence right holder, and when a buyer buys an equity right corresponding to the residence right and satisfies the condition for a residence right holder, the buyer is determined as the residence right holder.

14. The method of claim 13, wherein the percentage of equity right yielding a residence right comprises at least two equity percentages including a first residence right equity percentage and a second residence right equity percentage, which yield different dividend percentages of the residence right and the investment right.

15. The method of claim 11, wherein in the dividend providing step, the predetermined dividend condition comprises any one of expiration of a predetermined time limit and a rise of a price of the real estate in excess of a predetermined price, and the investor has a greater dividend percentage than the residence right holder.

16. The method of claim 11, further comprising: prior to the dividend providing step, an equity right circulating step of receiving and registering, by the real estate transaction service provider server, equity right sale information of an investor from the trader terminal connected over the network, providing the equity right sale information and price information to a plurality of trader terminals to perform transaction in lieu of the seller, and processing a right change and a cost resulting from the transaction.

17. The method of claim 11, wherein when there is a change including a change in rights related to the real estate, the real estate transaction service provider server notifies related persons including a seller and a buyer of the equity right for the real estate of the change via at least one of an e-mail, a short message, a voice message, and a multimedia message.
